# EUROPÄISCHE PATENTSCHRIFT

(11) **EP 3 267 271 B1**
(45) Veröffentlichungstag und Bekanntmachung des Hinweises auf die Patenterteilung: **26.12.2018**
(21) Anmeldenummer: 16177889.9
(22) Anmeldetag: 05.07.2016
(51) Int. Cl.: G05B 19/042, G05B 19/05

(54) **AUTOMATISIERUNGSSYSTEM UND VERFAHREN ZUM BETRIEB**
AUTOMATION SYSTEM AND METHOD FOR OPERATING SAME
SYSTÈME D'AUTOMATISATION ET PROCÉDÉ DE FONCTIONNEMENT

(43) Veröffentlichungstag der Anmeldung: 10.01.2018
(73) Patentinhaber: Siemens Aktiengesellschaft, 80333 München (DE)
(72) Erfinder: Weber, Tobias, 09212 Limbach-Oberfrohna (DE); Schneider, Dirk, 08115 Lichtentanne (DE); Zschoppe, Claudia, 09112 Chemnitz (DE)

(56) Entgegenhaltungen:
- US-A1- 2009 276 059
- US-A1- 2013 274 900
- MIRKO FUNKE: "PROFINET Innovations 2010", INTERNET CITATION, 31. Dezember 2010 (2010-12-31), Seiten 1-8, XP002688117, Gefunden im Internet: URL:http://www.automation.siemens.com/mcms /automation/en/industrial-communications/p rofinet/Documents/articles/_assets/innovat ion/PROFINET_Innovations_EN_F1.pdf [gefunden am 2012-11-27]

## Beschreibung

Die Erfindung betrifft ein Automatisierungssystem umfassend eine erste Steuereinrichtung mit einem ersten Feldbusanschluss, eine zweite Steuereinrichtung mit einem zweiten Feldbusanschluss, einen Feldbus, eine Peripheriebaugruppe mit zumindest einem Ein-/Ausgangs-Peripheriemodul zum Anschluss von Sensoren und/oder Aktoren, wobei die Peripheriebaugruppe ein Schnittstellenmodul mit einem dritten Feldbusanschluss für eine Kommunikation zu oder von den Steuereinrichtungen aufweist, wobei das Schnittstellenmodul zumindest ein Ein-/Ausgangs-Modul aufweist, in welchem Verschaltungsinformationen hinterlegt sind, wobei die Verschaltungsinformationen eine Zuordnung von Ein-/Ausgängen des oder der Ein-/Ausgangs-Peripheriemodule zu den Steuereinrichtungen aufweist.

Ausgangsbasis für die Erfindung ist ein Automatisierungssystem bzw. ein Feldbussystem mit einem zyklischen Austausch von Ein- und Ausgangsdaten zwischen mehreren Kommunikationsteilnehmern, typischerweise speicherprogrammierbaren Steuerungen und Peripheriesystem.

Ein direkter zyklischer Datenaustausch zwischen mehreren speicherprogrammierbaren Steuerungen, welcher beispielsweise für eine Kopplung von Maschinen einer Produktionslinie notwendig ist, wird von derartigen Systemen nicht unterstützt, da Kommunikationsbeziehungen nur zwischen den speicherprogrammierbaren Steuerungen und den Peripheriesystemen aufgebaut werden.

So ist es auch aus der US 2009/0276059 A1 bekannt, in einzelnen SPSen existierenden Link-Tabellen (Link-Devices, Refresh Devices) um die Kommunikation zwischen den SPSen zu ermöglichen.

Es ist Aufgabe der Erfindung, eine einfache, flexible und leistungsfähige Feldbuskommunikation zwischen mehreren speicherprogrammierbaren Steuerungen zu realisieren.

Für das eingangs genannte Automatisierungssystem wird die Aufgabe dadurch gelöst, dass das Schnittstellenmodul zusätzlich ein virtuelles Ein-/Ausgangs-Modul aufweist, in welchem der ersten Steuereinrichtung ein Ausgangsbereich zugeordnet ist, in welchem die erste Steuereinrichtung Ausgangsdaten schreiben kann und weiterhin der zweiten Steuereinrichtung ein Eingangsbereich zugeordnet ist, von welchem die zweite Steuereinrichtung Eingangsdaten abholen kann, dabei ist das virtuelle Ein-/Ausgangs-Modul derart ausgestaltet, dass die Ausgangsdaten vom Ausgangsbereich der ersten Steuereinrichtung als Eingangsdaten für die zweite Steuereinrichtung in den Eingangsbereich kopiert werden.

Natürlich kann das Schnittstellenmodul auch mehrere zusätzliche virtuelle Ein-/Ausgangs-Module enthalten.

Die Ein-/Ausgangs-Module kann man sich als einen konfigurierbaren Speicherbereich vorstellen, in welchem bei der Verbindung auf einer Steuereinrichtung zum Schnittstellenmodul entsprechende Konfigurationsdaten übertragen werden. Demnach weist das Schnittstellenmodul gemäß der Erfindung zwei Arten von Ein-/Ausgangsmodulen auf, nämlich die realen Ein-/Ausgangsmodule für die eigentliche Peripherie und die virtuellen Ein-/Ausgangsmodule für die Kommunikation der Steuereinrichtungen untereinander.

Die eingangs genannte Aufgabe wird ebenso durch ein Verfahren zum Betrieb eines Automatisierungssystems gelöst. Bei dem Verfahren zum Betrieb eines Automatisierungssystems tauschen eine erste Steuereinrichtung und eine zweite Steuereinrichtung über einen Feldbus mit einer Peripheriebaugruppe Daten aus, wobei der Datenaustausch sich zum einen auf das Senden von Ausgangsdaten zum Peripheriemodul bezieht, wobei über ein Ein-/Ausgangs-Modul in einem Schnittstellenmodul der Peripheriebaugruppe einem Ein-/Ausgangs-Peripheriemodul die Ausgangsdaten übergeben werden, und zum anderen auf ein Empfangen von Eingangsdaten vom Peripheriemodul bezieht, wobei über das Ein-/Ausgangs-Modul in dem Schnittstellenmodul der Peripheriebaugruppe von dem Ein-/Ausgangs-Peripheriemodul die Eingangsdaten entgegengenommen werden.

Erfindungsgemäß wird in dem Schnittstellenmodul ein virtuelles Ein-/Ausgangs-Modul betrieben, in welchem der ersten Steuereinrichtung ein Ausgangsbereich zugeordnet wird, in welchen die erste Steuereinrichtung Ausgangsdaten schreiben kann, und weiterhin der zweiten Steuerung ein Eingangsbereich zugeordnet wird, von welchem die zweite Steuerung Eingangsdaten abholen kann, dabei werden in dem virtuellen Ein-/Ausgangs-Modul die Ausgangsdaten vom Ausgangsbereich der ersten Steuereinrichtung als Eingangsdaten für die zweite Steuereinrichtung in den Eingangsbereich kopiert.

In einer vorteilhaften Weiterbildung des Verfahrens wird durch die Zuordnung des Ausgangsbereichs zur ersten Steuereinrichtung für die erste Steuereinrichtung ein erster Kanal gebildet, und durch die Zuordnung des Eingangsbereich zur zweiten Steuerung wird ein zweiter Kanal für die zweite Steuereinrichtung gebildet, wobei die erste Steuereinrichtung über eine Datenübertragungsstrecke, welche den ersten Kanal und den zweiten Kanal aufweist mit der zweiten Steuereinrichtung über das Peripheriemodul kommuniziert.

Durch eine Nutzung von Mehrfachzugriffen auf Ein-/Ausgangs-Kanäle des Peripheriemoduls, wie es beispielsweise bei Profinet Shared Device durchgeführt wird und implementiert ist, und die Verwendung des virtuellen Ein-/Ausgangs-Moduls in der Peripheriebaugruppe bzw. dem Peripheriemodul wird eine direkte Kommunikation von einer Steuereinrichtung zu einer anderen Steuereinrichtung (Inter-PLC-Kommunikation) realisiert. Dabei werden Ausgangsdaten einer schreibend zu greifenden Steuereinrichtung in dem virtuellen Ein-/Ausgangs-Modul der Peripheriebaugruppe den Eingangsdaten einer weiteren Steuereinrichtung oder auch mehreren weiteren Steuereinrichtungen zugeordnet. Dadurch können die Daten eines Ausgabekanals auf die Eingabekanäle weiterer Steuerungen übertragen werden. Eine Zuordnung und eine Datenbreite der E/A-Kanäle kann fest (statisch) oder flexibel (dynamisch) vorgenommen werden. Aus Sicht einer auf Daten zugreifenden Steuereinrichtung handelt es sich dabei immer um eine Punkt-zu-Punkt-Kommunikation zwischen zwei Feldbusteilnehmern. Eine Nutzung und eine Aufteilung der durch das virtuelle Ein-/Ausgangs-Modul zur Verfügung gestellten Kommunikationskanäle obliegen der Verantwortung der Steuerungsapplikationen. Beispielsweise wird die Spiegelung realer Peripheriedaten sowie die Übertragung von Parameter- und Status-Informationen einer Steuerungsapplikation auf eine andere Steuerungseinrichtung ermöglicht.

Eine Implementierung des Verfahrens könnte als eine Softwarelösung im Schnittstellenmodul der Peripheriebaugruppe erfolgen und hätte den Vorteil, dass keine zusätzlichen Feldbusbaugruppen, wie z.B. Profinet-Profinet-Koppler, und keine zusätzlichen Verdrahtungen für eine PLC-PLC-Kommunikation benötigt werden. Dies wird als ein Kostenvorteil angesehen, wenn eingesetzte Steuereinrichtungen weder eine C2C ("Controller to Controller Communication") noch eine CC-DX (I/O Controller Multicast Communication) unterstützen. Die Kommunikation zwischen den Steuereinrichtungen erfolgt über etablierte Feldbuskommunikationsmechanismen und stellt keine neuen Anforderungen an die bereits vorhandene Technik und die zu greifenden Komponenten.

Mit der Zeichnung wird ein Ausführungsbeispiel der Erfindung beschrieben. Es zeigt
- FIG 1: ein Automatisierungssystem,
- FIG 2: ein virtuelles Ein-/Ausgangs-Modul für den Zugriff von zwei Steuereinrichtungen und
- FIG 3: das virtuelle Ein-/Ausgangs-Modul für den Zugriff von n-Steuerungen.

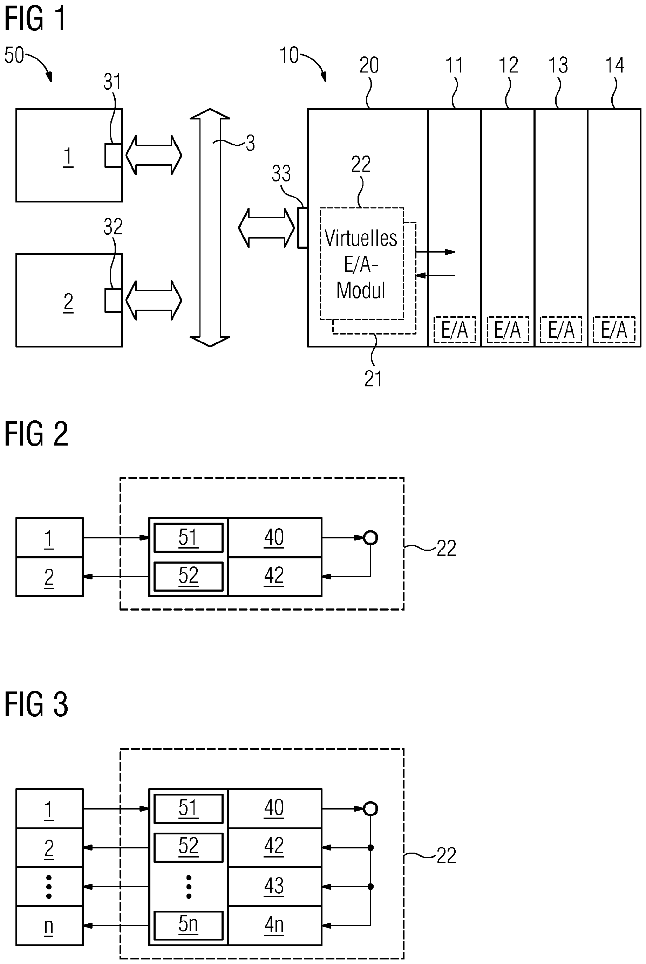

Gemäß der FIG 1 ist ein Automatisierungssystem 50 mit einer ersten Steuereinrichtung 1 und einer zweiten Steuereinrichtung 2 dargestellt. Die erste Steuereinrichtung 1 ist über einen ersten Feldbusanschluss 31 an einen Feldbus 3 angeschlossen. Die zweite Steuereinrichtung 2 ist über einen zweiten Feldbusanschluss 32 an den Feldbus 3 angeschlossen. Über einen dritten Feldbusanschluss 33 ist eine Peripheriebaugruppe 10 an den Feldbus 3 angeschlossen. Die Peripheriebaugruppe 10 weist ein Schnittstellenmodul 20 auf, an welches sich ein erstes Ein-/Ausgangs-Peripheriemodul 11, ein zweites Ein-/Ausgangs-Peripheriemodul 12, ein drittes Ein-/Ausgangs-Peripheriemodul 13 und ein viertes Ein-/Ausgangs-Peripheriemodul 14 anreiht. Die Ein-/Ausgangs-Peripheriemodule 11,12, 13,14 sind über einen Rückwandbus mit dem Schnittstellenmodul 20 verbunden. Über diesen internen Rückwandbus können die Ein-/Ausgangs-Peripheriemodule 11,12,13,14 Daten, insbesondere Eingangsdaten von Sensoren oder Ausgangsdaten zu Aktoren austauschen.

In dem Schnittstellenmodul 20 ist zumindest ein Ein-/Ausgangs-Modul 21 vorhanden, in welchem Verschaltungsinformationen hinterlegt sind, wobei die Verschaltungsinformationen eine Zuordnung von Ein-/Ausgängen des oder der Ein-/Ausgangs-Peripheriemodule 11,12,13,14 zu den Steuereinrichtungen 1,2 aufweist.

Um nun eine direkte Kommunikation von der ersten Steuereinrichtung 1 zu der zweiten Steuereinrichtung 2 zu ermöglichen, weist das Schnittstellenmodul 20 ein virtuelles Ein-/Ausgangs-Modul 22 auf, in welchem der ersten Steuereinrichtung ein Ausgangsbereich 40 (siehe FIG 2) zugeordnet ist, in welchem die erste Steuereinrichtung 1 Ausgangsdaten schreiben kann, und weiterhin der zweiten Steuereinrichtung 2 ein Eingangsbereich 42 (siehe FIG 2) zugeordnet ist, von welchem die zweite Steuereinrichtung 2 Eingangsdaten abholen kann, dabei ist das virtuelle Ein-/Ausgangs-Modul 22 derart ausgestaltet, dass die Ausgangsdaten vom Ausgangsbereich 40 der ersten Steuereinrichtung 1 als Eingangsdaten für die zweite Steuereinrichtung 2 in den Eingangsbereich 42 kopiert werden.

Mit der FIG 2 ist das virtuelle Ein-/Ausgangs-Modul 22 in einer Ausgestaltungsvariante für die Kommunikation zwischen der ersten Steuereinrichtung 1 und der zweiten Steuereinrichtung 2 dargestellt. Durch die Zuordnung des Ausgangsbereichs zur ersten Steuereinrichtung 1 wird für die erste Steuereinrichtung 1 ein erster Kanal 51 gebildet. Durch die Zuordnung des Eingangsbereichs 42 zur zweiten Steuereinrichtung 2 wird ein zweiter Kanal 52 für die zweite Steuereinrichtung 2 gebildet. Dabei kann die erste Steuereinrichtung 1 über eine Datenübertragungsstrecke, welche den ersten Kanal 51 und den zweiten Kanal 52 aufweist, direkt mit der zweiten Steuereinrichtung 2 über das Peripheriemodul 20 kommunizieren.

Wie FIG 3 zeigt, ist ebenso eine Kommunikation für n-Steuereinrichtungen möglich. Gemäß dem Beispiel nach FIG 3 stellt die erste Steuereinrichtung 1 über den ersten Kanal 51 Ausgangsdaten in den Ausgangsbereich 40 zur Verfügung. Diese Ausgangsdaten des Ausgangsbereiches 40 werden in den Eingangsbereich 42, und weiterhin einen zweiten Eingangsbereich 43,..,n-ten Eingangsbereich 4n kopiert. Dabei ist der Eingangsbereich 42 über den zweiten Kanal 52 der zweiten Steuereinrichtung 2 zugeordnet und der n-te Eingangsbereich 4n ist über einen n-ten Kanal 5n einer n-ten Steuereinrichtung n zugeordnet. Die erste Steuereinrichtung 1 kann somit als ein Sender für Daten dienen und die restlichen Steuereinrichtungen 2,..,n können als Empfänger der Daten über die entsprechenden Kanäle 52,..,5n für die Daten dienen.

## Patentansprüche

1. Automatisierungssystem (50) umfassend
- eine erste Steuereinrichtung (1) mit einem ersten Feldbusanschluss (31),
- eine zweite Steuereinrichtung (2) mit einem zweiten Feldbusanschluss (32),
- einen Feldbus (3),
- eine Peripheriebaugruppe (10) mit zumindest einem Ein-/Ausgangs-Peripheriemodul (11) zum Anschluss von Sensoren und/oder Aktoren, wobei die Peripheriebaugruppe (10) ein Schnittstellenmodul (20) mit einem dritten Feldbusanschluss (33) für eine Kommunikation zu und/oder von den Steuereinrichtungen (1,2) aufweist,
wobei das Schnittstellenmodul (20) zumindest ein Ein-/Ausgangs-Modul (21) aufweist, in welchem Verschaltungsinformationen hinterlegt sind, wobei die Verschaltungsinformationen eine Zuordnung von Ein-/Ausgängen des oder der Ein-/Ausgangs-Peripheriemodule (11) zu den Steuereinrichtungen (1,2) aufweist,
**dadurch gekennzeichnet, dass** das Schnittstellenmodul (20) zusätzlich ein virtuelles Ein-/Ausgangs-Modul (22) aufweist, in welchem der ersten Steuereinrichtung (1) ein Ausgangsbereich (40) zugeordnet ist, in welchen die erste Steuereinrichtung (1) Ausgangsdaten schreiben kann, und weiterhin der zweiten Steuereinrichtung (2) ein Eingangsbereich (42) zugeordnet ist, von welchem die zweite Steuereinrichtung (2) Eingangsdaten abholen kann, dabei ist das virtuelle Ein-/Ausgangs-Modul (22) derart ausgestaltet, dass die Ausgangsdaten vom Ausgangsbereich (40) der ersten Steuereinrichtung (1) als Eingangsdaten für die zweite Steuereinrichtung (2) in den Eingangsbereich (42) kopiert werden.

2. Verfahren zum Betrieb eines Automatisierungssystems (50), wobei eine erste Steuereinrichtung (1) und eine zweite Steuereinrichtung (2) über einen Feldbus (3) mit einer Peripheriebaugruppe (10) Daten austauscht, wobei der Datenaustausch sich zum einen auf das Senden von Ausgangsdaten zum Peripheriemodul (20) bezieht, wobei über ein Ein-/Ausgangs-Modul (21) in einem Schnittstellenmodul (20) der Peripheriebaugruppe (10) einem Ein-/Ausgangs-Peripheriemodul (11) die Ausgangsdaten übergeben werden, und zum anderen auf ein Empfangen von Eingangsdaten vom Peripheriemodul (20) bezieht, wobei über das Ein-/Ausgangs-Modul (21) in dem Schnittstellenmodul (20) der Peripheriebaugruppe (10) von dem Ein-/Ausgangs-Peripheriemodul (11) die Eingangsdaten entgegengenommen werden
**dadurch gekennzeichnet, dass** in dem Schnittstellenmodul (20) ein virtuelles Ein-/Ausgangs-Modul (22) betrieben wird, in welchem der ersten Steuereinrichtung (1) ein Ausgangsbereich (40) zugeordnet wird, in welchen die erste Steuereinrichtung (1) Ausgangsdaten schreiben kann, und weiterhin der zweiten Steuereinrichtung (2) ein Eingangsbereich (42) zugeordnet wird, von welchem die zweite Steuereinrichtung (2) Eingangsdaten abholen kann, dabei werden in dem virtuellen Ein-/Ausgangs-Modul (22) die Ausgangsdaten vom Ausgangsbereich (40) der ersten Steuereinrichtung (1) als Eingangsdaten für die zweite Steuereinrichtung (2) in den Eingangsbereich (42) kopiert.

3. Verfahren nach Anspruch 2, wobei durch die Zuordnung des Ausgangsbereichs zur ersten Steuereinrichtung (1) für die erste Steuereinrichtung (1) ein erster Kanal (51) gebildet wird, und durch die Zuordnung des Eingangsbereichs (42) zur zweiten Steuereinrichtung (2) ein zweiter Kanal (52) für die zweite Steuereinrichtung (2) gebildet wird, wobei die erste Steuereinrichtung (1) über eine Datenübertragungsstrecke, welche den ersten Kanal (51) und den zweiten Kanal (52) aufweist, mit der zweiten Steuereinrichtung (2) über das Peripheriemodul (20) kommuniziert.

## Claims

1. Automation system (50) comprising
- a first control facility (1) with a first fieldbus connection (31),
- a second control facility (2) with a second fieldbus connection (32),
- a fieldbus (3),
- a peripheral board (10) with at least one I/O peripheral module (11) for the connection of sensors and/or actuators, wherein the peripheral board (10) has an interface module (20) with a third fieldbus connection (33) for communication to or from the control facilities (1,2),
wherein the interface module (20) has at least one I/O module (21), in which interconnection information is stored, wherein the interconnection information features an assignment of input/outputs of the I/O peripheral module(s) (11) to the control facilities (1,2),
**characterised in that** the interface module (20) additionally has a virtual I/O module (22), in which an output region (40), in which the first control facility (1) can write output data, is assigned to the first control facility (1), and furthermore an input region (42), from which the second control facility (2) can retrieve input data, is assigned to the second control facility (2), the virtual I/O module (22) is configured in this case such that the output data is copied from the output region (40) of the first control facility (1) into the input region (42) as input data for the second control facility (2).

2. Method for operation of an automation system (50), wherein a first control facility (1) and a second control facility (2) exchange data with a peripheral board (10) via a fieldbus (3), wherein the data exchange relates on the one hand to the transmitting of output data to the peripheral module (20), wherein the output data is delivered to an I/O peripheral module (11) via an I/O module (21) in an interface module (20) of the peripheral board (10), and on the other hand to a receiving of input data by the peripheral module (20), wherein the input data is accepted by the I/O peripheral module (11) via the I/O module (21) in the interface module (20) of the peripheral board (10),
**characterised in that** a virtual I/O module (22) is operated in the interface module (20), in which an output region (40), in which the first control facility (1) can write output data, is assigned to the first control facility (1), and furthermore an input region (42), from which the second control facility (2) can retrieve input data, is assigned to the second control facility (2), in the virtual I/O module (22) the output data in this case being copied from the output region (40) of the first control facility (1) into the input region (42) as input data for the second control facility (2).

3. Method according to claim 2, wherein a first channel (51) is formed for the first control facility (1) by the assignment of the output region to the first control facility (1) and a second channel (52) is formed for the second control facility (2) by the assignment of the input region (42) to the second control facility (2), wherein the first control facility (1) communicates with the second control facility (2) via the peripheral module (20) using a data transmission link which features the first channel (51) and the second channel (52).

## Revendications

1. Système (50) d'automatisation, comprenant
- un premier dispositif (1) de commande, ayant un premier point (31) d'accès à un bus sur site,
- un deuxième dispositif (2) de commande, ayant un deuxième point (32) d'accès à un bus sur site,
- un bus (3) sur site,
- un bloc (10) périphérique, ayant au moins un module (11) périphérique d'entrée/sortie pour la connexion de capteurs et/ou d'actionneurs, le groupe (10) périphérique ayant un module (20) d'interface avec un troisième point (33) d'accès au bus sur site pour une communication vers les dispositifs (1, 2) de commande et/ou à partir de ceux-ci,
dans lequel le module (20) d'interface a au moins un module (21) d'entrée/sortie, dans lequel sont mises en mémoire des informations de câblage, les informations de câblage ayant une affectation des entrées/sorties du ou des modules (11) périphériques d'entrée/sortie aux dispositifs (1, 2) de commande,
**caractérisé en ce que** le module (20) d'interface a, en outre, un module (22) d'entrée/sortie virtuel, dans lequel il est affecté, au premier dispositif (1) de commande, une partie (40) de sortie, dans laquelle le premier dispositif (1) de commande peut écrire des données de sortie et, en outre, il est affecté, au deuxième dispositif (2) de commande, une partie (42) d'entrée, dans laquelle le deuxième dispositif (2) de commande peut aller chercher des données d'entrée, le module (22) d'entrée/sortie virtuel étant conformé de manière à ce que les données de sortie de la partie (20) de sortie du premier dispositif (1) de commande soient copiées dans la partie (42) d'entrée, comme données d'entrée pour le deuxième dispositif (2) de commande.

2. Procédé pour faire fonctionner un système (50) d'automatisation, dans lequel un premier dispositif (1) de commande et un deuxième dispositif (2) de commande échangent des données avec un bloc (10) périphérique, par l'intermédiaire d'un bus (3) sur site, l'échange de données se rapportant, d'une part, à l'envoi de données de sortie au module (20) périphérique, dans lequel, par un module (21) d'entrée/sortie dans un module (20) d'interface du groupe (10) périphérique, on transmet les données de sortie à un module (11) périphérique d'entrée/sortie et, d'autre part, à une réception de données d'entrée par le module (11) périphérique, dans lequel, par le module (21) d'entrée/sortie dans le module (20) d'interface du bloc (10) périphérique, on reçoit les données d'entrée du module (11) périphérique d'entrée/sortie,
**caractérisé en ce que** l'on fait fonctionner dans le module (20) d'interface un module (22) d'entrée/sortie virtuel, dans lequel il est affecté, au premier dispositif (1) de commande, une partie (40) de sortie, dans laquelle le premier dispositif (1) de commande peut écrire des données de sortie et, en outre, il est affecté, au deuxième dispositif (2) de commande, une partie (42) d'entrée, dans laquelle le deuxième dispositif (2) de commande peut aller chercher des données d'entrée, les données de sortie de la partie (40) de sortie du premier dispositif (1) de commande étant, dans le module (22) d'entrée/sortie virtuel, copiées dans la partie (42) d'entrée, comme données d'entrée pour le deuxième dispositif (2) de commande.

3. Procédé suivant la revendication 2, dans lequel, par l'affectation de la partie de sortie au premier dispositif (1) de commande, il est formé, pour le premier dispositif (1) de commande, un premier canal (51) et, par l'affectation de la partie (42) d'entrée au deuxième dispositif (2) de commande, il est formé un deuxième canal (52) pour le deuxième dispositif (2) de commande, le premier dispositif (1) de commande communiquant, par le module (20) périphérique, avec le deuxième dispositif (2) de commande, par l'intermédiaire d'une section de transmission de données, qui a le premier canal (51) et le deuxième canal (52).
